# EUROPEAN PATENT APPLICATION

(11) **EP 4 318 860 A1**
(43) Date of publication of application: **07.02.2024**
(21) Application number: 22787329.6
(22) Date of filing: 18.03.2022
(51) Int. Cl.: H02J 7/00

(54) **BATTERY CHARGING AND DISCHARGING SYSTEM, CIRCUIT, AND METHOD**

(30) Priority: 12.04.2021 CN 202110390785
(71) Applicant: Huawei Digital Power Technologies Co., Ltd., Shenzhen, Guangdong 518043 (CN)
(72) Inventor: LIU, Xiaoxi, Shenzhen, Guangdong 518043 (CN); XU, Zhiwu, Shenzhen, Guangdong 518043 (CN); LI, Lin, Shenzhen, Guangdong 518043 (CN)
(74) Representative: Maiwald GmbH
(86) International application number: PCT/CN2022/081778
(87) International publication number: WO 2022/218100

(57) **Abstract**

A battery charging and discharging system (20), circuit (100), and method are provided. The system (20) includes: the battery charging and discharging circuit (100) and a control circuit (200) coupled to the battery charging and discharging circuit (100). The battery charging and discharging circuit (100) includes a DC/DC converter (101), and the control circuit (200) includes a sampling circuit (201), a processor (202), and a drive circuit (203). The processor (202) is configured to: determine a first target current value corresponding to each of at least two feedback controls based on sampled data corresponding to the at least two feedback controls; determine a second target current value based on the first target current value corresponding to each of the at least two feedback controls; and comprehensively balance a first target current value of each feedback control, to adaptively determine a second target current value to be output. A drive signal is generated based on the second target current value, and the drive signal is output to the DC/DC converter (101). In this way, charging and discharging behaviors are adaptively controlled within an expected range, and charging and discharging of the battery charging and discharging circuit (100) can be effectively protected.

## Description

### CROSS-REFERENCE TO RELATED APPLICATIONS

This application claims priority to Chinese Patent Application No. 202110390785.8, filed with the China National Intellectual Property Administration on April 12, 2021, and entitled "BATTERY CHARGING AND DISCHARGING SYSTEM, CIRCUIT, AND METHOD", which is incorporated herein by reference in its entirety.

### TECHNICAL FIELD

This application relates to the field of circuit control technologies, and in particular, to a battery charging and discharging system, circuit, and method.

### BACKGROUND

A storage battery is usually used to supply power in various application scenarios. For example, in a new energy system that includes an energy storage part, the storage battery is an energy storage battery. In the new energy system, a bidirectional flow of electricity in the new energy system can be implemented by charging and discharging the storage battery. A charging and discharging current of the storage battery affects a state of health of the storage battery and charging and discharging efficiency of the storage battery. To improve the charging and discharging efficiency of the storage battery, the charging and discharging current needs to be increased. However, overcharging (that is, a charging current is excessively large) or overdischarging (that is, a discharging current is excessively large) of the storage battery may affect safety of the storage battery and a battery charging and discharging circuit.

Therefore, how to meet various requirements for storage battery charging and discharging, such as a safety requirement and a charging and discharging efficiency requirement, is a problem to be resolved urgently.

### SUMMARY

This application provides a battery charging and discharging system, circuit, and method, to meet various requirements for storage battery charging and discharging.

According to a first aspect, this application provides a battery charging and discharging system, including a battery charging and discharging circuit and a control circuit coupled to the battery charging and discharging circuit. The battery charging and discharging circuit includes a DC/DC converter, the DC/DC converter includes a switching device configured to adjust a magnitude of a current of the battery charging and discharging circuit, and the control circuit includes a sampling circuit, a processor, and a drive circuit.

The sampling circuit is configured to: perform sampling on the battery charging and discharging circuit; obtain sampled data corresponding to at least two feedback controls; and output, to the processor, the sampled data corresponding to the at least two feedback controls.

The processor is configured to: determine a first target current value corresponding to each of the at least two feedback controls based on the sampled data corresponding to the at least two feedback controls; determine a second target current value based on the first target current value corresponding to each of the at least two feedback controls; generate control information based on the second target current value; and output the control information to the drive circuit.

The drive circuit is configured to: generate a drive signal based on the control information output by the processor; and output the drive signal to the DC/DC converter. The drive signal is used to control a switching status of the switching device in the DC/DC converter.

In the foregoing manner, the sampling circuit obtains the sampled data corresponding to the at least two feedback controls. The processor comprehensively considers the first target current value corresponding to each of the at least two feedback controls based on the at least two feedback controls and the corresponding sampled data, and comprehensively balances the first target current value of each feedback control, to adaptively determine a first target current value to be output, and obtain a second target current value that meets a real-time requirement of the battery charging and discharging circuit. Further, the drive signal is generated based on the second target current value output by the processor, and the drive signal is output to the DC/DC converter. In this way, a switching status of the switching device in the DC/DC converter is controlled, so that charging and discharging behaviors may be adaptively controlled within an expected range, and charging and discharging of the battery charging and discharging circuit can be effectively protected.

To further ensure that the second target current value is within the expected range, a range of the second target current value may be limited in advance based on the first target current value. In a possible implementation, the second target current value is greater than or equal to a minimum current value in first target current values respectively corresponding to the at least two feedback controls, and is less than or equal to a maximum current value in the first target current values corresponding to the at least two feedback controls, and is less than or equal to a rated current of the battery charging and discharging circuit.

According to the foregoing manner, the second target current value may adaptively fall between the minimum current value and the maximum current value in the first target current values, and is less than or equal to the rated current of the battery charging and discharging circuit, so that the second target current value may be controlled within the expected range, thereby improving safety.

The at least two feedback controls may be flexibly set based on actual needs. In a possible implementation, the at least two feedback controls include a bus voltage feedback control for controlling a bus voltage of the battery charging and discharging circuit to be within a preset voltage range, and include at least one of the following feedback controls:
a first power feedback control for controlling a power of a storage battery to be greater than a first power value;
a second power feedback control for controlling the power of the storage battery to be less than a second power value, where the first power value is less than the second power value;
a first battery voltage feedback control for controlling a voltage of the storage battery to be greater than a first voltage value;
a second battery voltage feedback control for controlling the voltage of the storage battery to be less than a second voltage value, where the first voltage value is less than the second voltage value and is positive;
a first current feedback control for controlling a current of the storage battery to be greater than a first current value; and
a second current feedback control for controlling the current of the storage battery to be less than a second current value, where the first current value is less than the second current value and is positive.

In the foregoing manner, the at least two feedback controls include the bus voltage feedback control and at least one of a plurality of feedback controls, and the bus voltage feedback control is used to control the bus voltage of the battery charging and discharging circuit to be within the preset voltage range, thereby increasing flexibility of controlling charging and discharging on the basis of ensuring stability of the battery charging and discharging circuit.

The processor may determine the second target current value based on the first target current value corresponding to each of the at least two feedback controls in a plurality of manners. Details are as follows:

### Manner 1:

An average value of the first target current values corresponding to the at least two feedback controls is used as the second target current value.

It should be noted that an operation of the average value of the first target current values corresponding to the at least two feedback controls herein is only an operation that considers the magnitude of the current.

According to the foregoing Manner 1, the average value of the first target current values corresponding to the at least two feedback controls is considered, and a requirement of a storage battery corresponding to each feedback control is comprehensively balanced.

### Manner 2:

A current value in the following current value interval is determined as a current value of the second target current value. A lower limit of the value interval is the minimum current value in the first target current values respectively corresponding to the at least two feedback controls, and an upper limit of the interval is the maximum current value in the first target current values respectively corresponding to the at least two feedback controls and a minimum value of rated current values of the battery charging and discharging circuit. In this way, a current value of the second target current value is greater than or equal to the minimum current value in the first target current values respectively corresponding to the at least two feedback controls, and is less than or equal to the maximum current value in the first target current values respectively corresponding to the at least two feedback controls, and is less than or equal to the rated current of the battery charging and discharging circuit. Certainly, the value interval may also be used as a value interval of the second target current value.

According to the foregoing Manner 2, the second target current value may adaptively fall between the minimum current value and the maximum current value in the first target current values, and is less than or equal to the rated current of the battery charging and discharging circuit. In this way, the current of the battery charging and discharging circuit may be controlled within the expected range, and safety of the battery charging and discharging circuit and/or the storage battery is ensured on the basis of comprehensively considering various requirements of the storage battery.

### Manner 3:

The minimum current value in the first target current values corresponding to the at least two feedback controls is determined as a magnitude of the second target current value.

In the foregoing Manner 3, the minimum current value in the first target current values corresponding to the at least two feedback controls is determined as the magnitude of the second target current value, thereby improving safety of the battery charging and discharging circuit.

### Manner 4:

Any one of the at least two feedback controls corresponds to an indicator of the battery charging and discharging circuit, and is configured to adjust, by using the first target current value, a sampled indicator obtained based on the sampled data to a preset target indicator. The processor is specifically configured to:
determine an indicator deviation corresponding to each of the at least two feedback controls, where an indicator deviation corresponding to any one of the at least two feedback controls indicates a difference between the sampled indicator obtained by the feedback control based on the sampled data and the preset target indicator; select one of the at least two feedback controls based on the indicator deviation corresponding to each of the at least two feedback controls; and determine a first target current value corresponding to the selected feedback control as the second target current value.

In the foregoing Manner 4, an indicator deviation corresponding to each feedback control is determined, to represent a difference between a sampled indicator corresponding to each feedback control and the preset target indicator, and reflect an adjustment requirement degree for each sampled indicator in the battery charging and discharging circuit. Based on this, one of the at least two feedback controls is selected. In this way, the second target current value is adaptively determined, and a real-time adjustment requirement of the battery charging and discharging circuit is automatically met.

Manner 4 may specifically include the following two sub-cases:
in a first sub-case, if a first indicator deviation in indicator deviations respectively corresponding to the at least two feedback controls is a unique highest indicator deviation, a first target current value corresponding to the first indicator deviation is determined as the second target current value; or
in a second sub-case, if N indicator deviations are the highest among the indicator deviations respectively corresponding to the at least two feedback controls, a feedback control corresponding to a second indicator deviation is randomly selected from feedback controls corresponding to the N indicator deviations, and a first target current value corresponding to the feedback control corresponding to the second indicator deviation is determined as the second target current value, where
N is an integer greater than or equal to 2.

In the two sub-cases of the foregoing Manner 4, the highest indicator deviation reflects the most urgent adjustment requirement degree in the battery charging and discharging circuit. The first target current value corresponding to the first indicator deviation or the first target current value corresponding to the feedback control corresponding to the second indicator deviation is determined as the second target current value, so that an adjustment requirement of a sampled indicator corresponding to the highest indicator deviation can be adaptively and preferentially met.

### Manner 5:

Any one of the at least two feedback controls corresponds to an indicator of the battery charging and discharging circuit, and is configured to adjust, by using a first target current value, a sampled indicator obtained based on the sampled data to a preset target indicator. The processor is specifically configured to:
determine an indicator deviation corresponding to each of the at least two feedback controls, where an indicator deviation corresponding to any one of the at least two feedback controls indicates a difference between the sampled indicator obtained by the feedback control based on the sampled data and the preset target indicator;
determine a weight corresponding to each of the at least two feedback controls based on the indicator deviation corresponding to each of the at least two feedback controls; and
perform weighted accumulation on the first target current value corresponding to each of the at least two feedback controls based on the weight corresponding to each of the at least two feedback controls, and determine a result of the weighted accumulation as the second target current value.

In the foregoing Manner 5, the weight corresponding to each of the at least two feedback controls is determined based on the indicator deviation corresponding to each of the at least two feedback controls, and the weight corresponding to each of the at least two feedback controls may be determined in real time based on real-time adjustment requirement degrees of sampled indicators in the battery charging and discharging circuit. That is, an impact degree of a final result of the weighted accumulation is determined in real time. In this way, an adjustment requirement degree and an impact degree of each sampled indicator in the battery charging and discharging circuit are comprehensively considered in real time, and a real-time and comprehensive adjustment requirement can be met adaptively.

### Manner 6:

Weighted accumulation is performed on the first target current value corresponding to each of the at least two feedback controls based on a preset weight corresponding to each of the at least two feedback controls, and a result of the weighted accumulation is determined as the second target current value.

In the foregoing Manner 6, weighted accumulation is performed on the first target current value corresponding to each of the at least two feedback controls based on the preset weight corresponding to each of the at least two feedback controls, to control, based on the at least two feedback controls, an impact degree of the first target current value corresponding to each of the at least two feedback controls on a final result of the weighted accumulation, thereby adaptively meeting a real-time and comprehensive adjustment requirement.

According to a second aspect, this application provides a battery charging and discharging control circuit. The control circuit includes a sampling circuit, a control information generation circuit, and a drive circuit.

The sampling circuit is configured to: perform sampling on a battery charging and discharging circuit coupled to the battery charging and discharging control circuit; obtain sampled data corresponding to at least two feedback controls; and output, to the processor, the sampled data corresponding to the at least two feedback controls.

The processor is configured to: determine a first target current value corresponding to each of the at least two feedback controls based on the sampled data corresponding to the at least two feedback controls; determine a second target current value based on the first target current value corresponding to each of the at least two feedback controls; generate control information based on the second target current value; and output the control information to the drive circuit.

The drive circuit is configured to: generate a drive signal based on the control information output by the processor. The drive signal is used to control a current of the battery charging and discharging circuit.

To further ensure that the second target current value is within the expected range, a range of the second target current value may be limited in advance based on the first target current value. In a possible implementation, the second target current value is greater than or equal to a minimum current value in first target current values respectively corresponding to the at least two feedback controls, and is less than or equal to a maximum current value in the first target current values corresponding to the at least two feedback controls, and is less than or equal to a rated current of the battery charging and discharging circuit.

The at least two feedback controls may be flexibly set based on actual needs. In a possible implementation, the at least two feedback controls include a bus voltage feedback control for controlling a bus voltage of the battery charging and discharging circuit to be within a preset voltage range, and include at least one of the following feedback controls:
a first power feedback control for controlling a power of a storage battery to be greater than a first power value;
a second power feedback control for controlling the power of the storage battery to be less than a second power value, where the first power value is less than the second power value;
a first battery voltage feedback control for controlling a voltage of the storage battery to be greater than a first voltage value;
a second battery voltage feedback control for controlling the voltage of the storage battery to be less than a second voltage value, where the first voltage value is less than the second voltage value and is positive;
a first current feedback control for controlling a current of the storage battery to be greater than a first current value; and
a second current feedback control for controlling the current of the storage battery to be less than a second current value, where the first current value is less than the second current value and is positive.

There may be a plurality of possible cases in which the processor determines the second target current value based on the first target current value corresponding to each of the at least two feedback controls, which may specifically include the following.

The processor may determine the second target current value based on the first target current value corresponding to each of the at least two feedback controls in a plurality of manners. Details are as follows:

### Manner 1:

An average value of the first target current values corresponding to the at least two feedback controls is used as the second target current value.

### Manner 2:

A current value in the following current value interval is determined as a current value of the second target current value. A lower limit of the value interval is the minimum current value in the first target current values respectively corresponding to the at least two feedback controls, and an upper limit of the interval is the maximum current value in the first target current values respectively corresponding to the at least two feedback controls and a minimum value of rated current values of the battery charging and discharging circuit. In this way, a current value of the second target current value is greater than or equal to the minimum current value in the first target current values respectively corresponding to the at least two feedback controls, and is less than or equal to the maximum current value in the first target current values respectively corresponding to the at least two feedback controls, and is less than or equal to the rated current of the battery charging and discharging circuit. Certainly, the value interval may also be used as a value interval of the second target current value.

### Manner 3:

The minimum current value in the first target current values corresponding to the at least two feedback controls is determined as a magnitude of the second target current value.

### Manner 4:

Any one of the at least two feedback controls corresponds to an indicator of the battery charging and discharging circuit, and is configured to adjust, by using the first target current value, a sampled indicator obtained based on the sampled data to a preset target indicator. The processor is specifically configured to:
determine an indicator deviation corresponding to each of the at least two feedback controls, where an indicator deviation corresponding to any one of the at least two feedback controls indicates a difference between the sampled indicator obtained by the feedback control based on the sampled data and the preset target indicator; select one of the at least two feedback controls based on the indicator deviation corresponding to each of the at least two feedback controls; and determine a first target current value corresponding to the selected feedback control as the second target current value.

Manner 4 may specifically include the following two sub-cases:
in a first sub-case, if a first indicator deviation in indicator deviations respectively corresponding to the at least two feedback controls is a unique highest indicator deviation, a first target current value corresponding to the first indicator deviation is determined as the second target current value; or
in a second sub-case, if N indicator deviations are the highest among the indicator deviations respectively corresponding to the at least two feedback controls, a feedback control corresponding to a second indicator deviation is randomly selected from feedback controls corresponding to the N indicator deviations, and a first target current value corresponding to the feedback control corresponding to the second indicator deviation is determined as the second target current value, where
N is an integer greater than or equal to 2.

### Manner 5:

Any one of the at least two feedback controls corresponds to an indicator of the battery charging and discharging circuit, and is configured to adjust, by using the first target current value, a sampled indicator obtained based on the sampled data to a preset target indicator. The processor is specifically configured to:
determine an indicator deviation corresponding to each of the at least two feedback controls, where an indicator deviation corresponding to any one of the at least two feedback controls indicates a difference between the sampled indicator obtained by the feedback control based on the sampled data and the preset target indicator;
determine a weight corresponding to each of the at least two feedback controls based on the indicator deviation corresponding to each of the at least two feedback controls; and
perform weighted accumulation on the first target current value corresponding to each of the at least two feedback controls based on the weight corresponding to each of the at least two feedback controls, and determine a result of the weighted accumulation as the second target current value.

### Manner 6:

Weighted accumulation is performed on the first target current value corresponding to each of the at least two feedback controls based on a preset weight corresponding to each of the at least two feedback controls, and a result of the weighted accumulation is determined as the second target current value.

For beneficial effects of the possible cases of the second aspect, refer to corresponding cases of the first aspect. Details are not described herein again.

According to a third aspect, this application provides a battery charging control method. The method is applicable to a battery charging and discharging system, and the battery charging and discharging system includes a battery charging and discharging circuit and a control circuit coupled to the battery charging and discharging circuit. The method includes:
obtaining sampled data corresponding to at least two feedback controls of the battery charging and discharging circuit;
determining a first target current value corresponding to each of the at least two feedback controls based on the sampled data corresponding to the at least two feedback controls; and determining a second target current value based on the first target current value corresponding to each of the at least two feedback controls; and
generating and outputting control information based on the second target current value, where the control information is used to generate a drive signal that controls a current of the battery charging and discharging circuit.

To further ensure that the second target current value is within the expected range, a range of the second target current value may be limited in advance based on the first target current value. In a possible implementation, the second target current value is greater than or equal to a minimum current value in first target current values respectively corresponding to the at least two feedback controls, and is less than or equal to a maximum current value in the first target current values corresponding to the at least two feedback controls, and is less than or equal to a rated current of the battery charging and discharging circuit.

The at least two feedback controls may be flexibly set based on actual needs. In a possible implementation, the at least two feedback controls include a bus voltage feedback control for controlling a bus voltage of the battery charging and discharging circuit to be within a preset voltage range, and include at least one of the following feedback controls:
a first power feedback control for controlling a power of a storage battery to be greater than a first power value;
a second power feedback control for controlling the power of the storage battery to be less than a second power value, where the first power value is less than the second power value;
a first battery voltage feedback control for controlling a voltage of the storage battery to be greater than a first voltage value;
a second battery voltage feedback control for controlling the voltage of the storage battery to be less than a second voltage value, where the first voltage value is less than the second voltage value and is positive;
a first current feedback control for controlling a current of the storage battery to be greater than a first current value; and
a second current feedback control for controlling the current of the storage battery to be less than a second current value, where the first current value is less than the second current value and is positive.

There may be a plurality of manners for determining the second target current value based on the first target current value corresponding to each of the at least two feedback controls, which are specifically as follows:

### Manner 1:

An average value of the first target current values corresponding to the at least two feedback controls is used as the second target current value.

### Manner 2:

A current value in the following current value interval is determined as a current value of the second target current value. A lower limit of the value interval is the minimum current value in the first target current values respectively corresponding to the at least two feedback controls, and an upper limit of the interval is the maximum current value in the first target current values respectively corresponding to the at least two feedback controls and a minimum value of rated current values of the battery charging and discharging circuit. In this way, a current value of the second target current value is greater than or equal to the minimum current value in the first target current values respectively corresponding to the at least two feedback controls, and is less than or equal to the maximum current value in the first target current values respectively corresponding to the at least two feedback controls, and is less than or equal to the rated current of the battery charging and discharging circuit. Certainly, the value interval may also be used as a value interval of the second target current value.

### Manner 3:

The minimum current value in the first target current values corresponding to the at least two feedback controls is determined as a magnitude of the second target current value.

### Manner 4:

Any one of the at least two feedback controls corresponds to an indicator of the battery charging and discharging circuit, and is configured to adjust, by using the first target current value, a sampled indicator obtained based on the sampled data to a preset target indicator. The determining a second target current value based on the first target current value corresponding to each of the at least two feedback controls includes:
determining an indicator deviation corresponding to each of the at least two feedback controls, where an indicator deviation corresponding to any one of the at least two feedback controls indicates a difference between the sampled indicator obtained by the feedback control based on the sampled data and the preset target indicator; selecting one of the at least two feedback controls based on the indicator deviation corresponding to each of the at least two feedback controls; and determining a first target current value corresponding to the selected feedback control as the second target current value.

Manner 4 may specifically include the following two sub-cases:
in a first sub-case, if a first indicator deviation in indicator deviations respectively corresponding to the at least two feedback controls is a unique highest indicator deviation, a first target current value corresponding to the first indicator deviation is determined as the second target current value; or
in a second sub-case, if N indicator deviations are the highest among the indicator deviations respectively corresponding to the at least two feedback controls, a feedback control corresponding to a second indicator deviation is randomly selected from feedback controls corresponding to the N indicator deviations, and a first target current value corresponding to the feedback control corresponding to the second indicator deviation is determined as the second target current value, where
N is an integer greater than or equal to 2.

### Manner 5:

Any one of the at least two feedback controls corresponds to an indicator of the battery charging and discharging circuit, and is configured to adjust, by using the first target current value, a sampled indicator obtained based on the sampled data to a preset target indicator. The determining a second target current value based on the first target current value corresponding to each of the at least two feedback controls includes:
determining an indicator deviation corresponding to each of the at least two feedback controls, where an indicator deviation corresponding to any one of the at least two feedback controls indicates a difference between the sampled indicator obtained by the feedback control based on the sampled data and the preset target indicator;
determining a weight corresponding to each of the at least two feedback controls based on the indicator deviation corresponding to each of the at least two feedback controls; and
performing weighted accumulation on the first target current value corresponding to each of the at least two feedback controls based on the weight corresponding to each of the at least two feedback controls, and determining a result of the weighted accumulation as the second target current value.

### Manner 6:

The determining a second target current value based on the first target current value corresponding to each of the at least two feedback controls includes:
performing weighted accumulation on the first target current value corresponding to each of the at least two feedback controls based on a preset weight corresponding to each of the at least two feedback controls, and determining a result of the weighted accumulation as the second target current value.

For beneficial effects of the possible cases of the third aspect, refer to corresponding cases of the first aspect. Details are not described herein again.

### BRIEF DESCRIPTION OF DRAWINGS

FIG. 1 is a schematic diagram of an optical storage system to which an embodiment of this application is applicable;
FIG. 2 is a schematic diagram of a structure of a battery charging and discharging system according to an embodiment of this application;
FIG. 3 is a schematic diagram of a structure of a processor in a battery charging and discharging system according to an embodiment of this application; and
FIG. 4 is a schematic flowchart of a battery charging and discharging method according to an embodiment of this application.

### DESCRIPTION OF EMBODIMENTS

The following clearly and completely describes the technical solutions in embodiments of this application with reference to the accompanying drawings in embodiments of this application.

Terms used in the following embodiments are only intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" refers to one or more than two (including two), and "and/or" describes an association between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", "have", and their variants mean "including but not limited to" unless especially emphasized otherwise.

In embodiments of this application, "a plurality of' means two or more. In view of this, in embodiments of this application, "a plurality of" may also be understood as "at least two". "At least one" may be understood as one or more, for example, one, two, or more. For example, "including at least one" means including one, two, or more, and does not limit items that are included. For example, if at least one of A, B, and C is included, A, B, C, A and B, A and C, B and C, or A, B, and C may be included. Similarly, understanding of the description such as "at least one type" is similar. The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

Unless otherwise stated, ordinal terms such as "first" and "second" mentioned in embodiments of this application are used to distinguish between a plurality of objects, and are not intended to limit a sequence, a time sequence, a priority, or an importance degree of the plurality of objects.

An embodiment of this application provides a battery charging and discharging system, which may be applied to an optical storage system, to meet various requirements for storage battery charging and discharging.

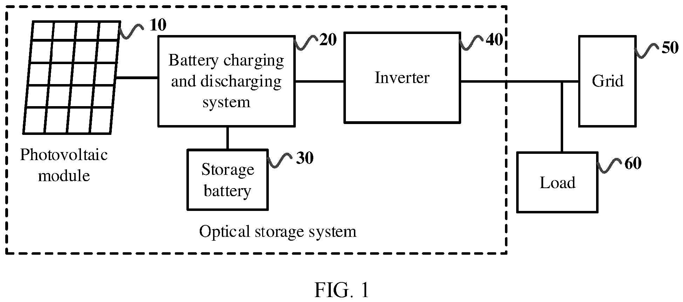

FIG. 1 is a schematic diagram of an optical storage system to which an embodiment of this application is applicable. The optical storage system shown in FIG. 1 includes a photovoltaic module 10, a battery charging and discharging system 20, a storage battery 30, and an inverter 40.

The photovoltaic module 10 is configured to convert solar energy into electrical energy, and transfer the generated electrical energy to the storage battery 30 for storage, or transfer the electrical energy to a grid 50 by using the inverter 40, or supply power to a load 60.

The battery charging and discharging system 20 is configured to store the electrical energy generated by the photovoltaic module 10 in the storage battery 30, and transfer the electrical energy in the storage battery 30 to the grid 50 or supply the electrical energy to the load 60 when necessary. For example, when a power supply capability of the photovoltaic module 10 is relatively strong (for example, when the weather is relatively good or when illumination is relatively sufficient), the electrical energy generated by the photovoltaic module 10 may be used to charge the storage battery 30; or when a power supply capability of the photovoltaic module 10 is relatively weak (for example, when the weather is relatively poor, or when it is at night, or when illumination is insufficient), the electrical energy stored in the storage battery 30 may be transferred to the grid 50 or supplied to the load 60.

The storage battery 30 is a chemical battery that converts solar energy into electrical energy, and is configured to store the electrical energy generated by the photovoltaic module 10. In this embodiment of this application, the storage battery 30 may be understood as a single storage battery 30, or may be understood as a storage battery string formed by a plurality of single storage batteries. There are various types of storage batteries, including lithium-ion batteries, hydrogen fuel batteries, and the like.

The inverter 40 is configured to convert a direct current output by the optical storage system into an alternating current, to transfer the alternating current to the grid 50 or supply power to the load 60. The inverter 40 is also referred to as a direct current-to-alternating current (direct current-alternating current, DC/AC) converter.

A function of the battery charging and discharging system 20 is to control charging and discharging of the storage battery 30, and a control objective may be multifaceted, for example, safety and charging and discharging efficiency. The battery charging and discharging system 20 provided in this embodiment of this application may consider a plurality of control objectives, for example, may consider charging and discharging efficiency while ensuring safety. The control objective can be implemented through feedback controls. A feedback control refers to a process of returning output information of a control system to an input end of the control system and controlling the control system in combination with input information of the control system in an automatic control theory.

It should be noted that a charging and discharging state of the storage battery 30 may be controlled based on a voltage output by the photovoltaic module 10 to the battery charging and discharging system 20 and a voltage of the inverter 40. When the voltage output by the photovoltaic module 10 to the battery charging and discharging system 20 is less than the voltage of the inverter 40, the storage battery 30 needs to be charged. Otherwise, the storage battery 30 needs to be discharged. A magnitude of a current in the battery charging and discharging system 20 may be implemented by using a feedback control mechanism in the battery charging and discharging system.

In this embodiment of this application, feedback controls used by the battery charging and discharging system may include at least two of the following feedback controls.
(1) A bus voltage feedback control for controlling a bus voltage of the battery charging and discharging circuit to be within a preset voltage range, to ensure safety of the battery charging and discharging circuit and the storage battery. It should be noted that a function of the bus voltage feedback control is to stabilize a bus voltage of the battery charging and discharging circuit close to a voltage value. Therefore, a preset voltage range may be set based on a preset bus voltage. For example, the preset bus voltage is 220 volts (V), and the preset voltage range is 219 V to 221 V In this case, the bus voltage feedback control is used to control the bus voltage of the battery charging and discharging circuit to be within a voltage range of 219 V to 221 V

It may be understood that the bus voltage feedback control corresponds to a bus voltage indicator of the battery charging and discharging circuit, and an objective of the bus voltage feedback control is to adjust a sampled indicator of the bus voltage to a target indicator. The sampled indicator of the bus voltage may be obtained based on sampled data corresponding to the bus voltage feedback control, and the target indicator of the bus voltage may be the preset voltage range.

An input of the bus voltage feedback control may be at least one of the following sampled data: current information obtained through sampling by the battery charging and discharging circuit, voltage information obtained through sampling, or power information (for example, a charging power or a discharging power) obtained through sampling. The current information obtained through sampling may include a current value (namely, a magnitude of a current), and the voltage information obtained through sampling may include a voltage value.

An output of the bus voltage feedback control may be a first target current value corresponding to the bus voltage feedback control, and the first target current value may be a current value, a value interval of the current value, or an adjustment value of the current value. When a magnitude of a current at a corresponding position in the battery charging and discharging circuit is a magnitude of a current that matches the first target current value, it may be ensured that the bus voltage of the battery charging and discharging circuit falls within the preset voltage range.

It should be noted that the current value in this embodiment of this application is a magnitude of a current, and the adjustment value of the current value is a current difference increased or decreased based on a sampled current value.

(2) A first power feedback control for controlling a power of a storage battery to be greater than a first power value, to ensure that charging and discharging efficiency of the storage battery meets a specific requirement. For example, the first power value is 1000 watts (W).

It may be understood that the first power feedback control corresponds to a power indicator of the storage battery, and an objective of the first power feedback control is to adjust a sampled indicator of a power of the storage battery to a target indicator. The sampled indicator of the power of the storage battery may be obtained based on sampled data corresponding to the first power feedback control, and the target indicator of the power of the storage battery may be greater than the first power value.

Similar to the input of the bus voltage feedback control, an input of the first power feedback control may alternatively be at least one piece of the foregoing sampled data. An output of the first power feedback control may be a first target current value corresponding to the first power feedback control. When a magnitude of a current at a corresponding position in the battery charging and discharging circuit is a magnitude of a current that matches the first target current value, it may be ensured that the power value of the storage battery is greater than the first power value.

(3) A second power feedback control for controlling the power of the storage battery to be less than a second power value, to ensure that charging efficiency of the storage battery does not exceed an upper limit, thereby ensuring safety of the storage battery and the battery charging and discharging circuit. The first power value is less than the second power value. For example, the second power value is 1,500 watts (W).

It may be understood that the second power feedback control corresponds to the power indicator of the storage battery, and an objective of the second power feedback control is to adjust the sampled indicator of the power of the storage battery to a target indicator. The sampled indicator of the power of the storage battery may be obtained based on sampled data corresponding to the second power feedback control, and the target indicator of the power of the storage battery may be less than the second power value.

Similarly, an input of the second power feedback control may alternatively be at least one piece of the foregoing sampled data. An output of the second power feedback control may be a first target current value corresponding to the second power feedback control. When a magnitude of a current at a corresponding position in the battery charging and discharging circuit is a magnitude of a current that matches the first target current value, it may be ensured that the power value of the storage battery is less than the second power value.

Apparently, when the first power feedback control and the second power feedback control are used together, the power of the storage battery may be controlled to be within a power value interval between the first power value and the second power value. For example, the power of the storage battery is controlled to be within 1,000 W to 1,500 W.

(4) A first battery voltage feedback control for controlling a voltage of the storage battery to be greater than a first voltage value, to ensure that a charging and discharging intensity of the storage battery meets a specific requirement. For example, the first voltage value is 100 V

It may be understood that the first battery voltage feedback control corresponds to a battery voltage indicator of the storage battery, and an objective of the first battery voltage feedback control is to adjust a sampled indicator of the battery voltage of the storage battery to a target indicator. The sampled indicator of the battery voltage of the storage battery may be obtained based on sampled data corresponding to the first battery voltage feedback control, and the target indicator of the battery voltage of the storage battery may be greater than the first battery voltage value.

An input of the first voltage feedback control may alternatively be at least one piece of the foregoing sampled data. An output of the first voltage feedback control may be a first target current value corresponding to the first voltage feedback control. When a magnitude of a current at a corresponding position in the battery charging and discharging circuit is a magnitude of a current that matches the first target current value, it may be ensured that the voltage value of the storage battery is greater than the first voltage value.

(5) A second battery voltage feedback control for controlling the voltage of the storage battery to be less than a second voltage value, to ensure that a charging intensity of the storage battery does not exceed an upper limit, thereby ensuring safety of the storage battery and the battery charging and discharging circuit. The first voltage value is less than the second voltage value and is positive. For example, the second voltage value is 200 V

It may be understood that the second battery voltage feedback control corresponds to the battery voltage indicator of the storage battery, and an objective of the second battery voltage feedback control is to adjust the sampled indicator of the battery voltage of the storage battery to the target indicator. The sampled indicator of the battery voltage of the storage battery may be obtained based on sampled data corresponding to the second battery voltage feedback control, and the target indicator of the battery voltage of the storage battery may be less than the second voltage value.

An input of the second voltage feedback control may alternatively be at least one piece of the foregoing sampled data. An output of the second voltage feedback control may be a first target current value corresponding to the second voltage feedback control. When a magnitude of a current at a corresponding position in the battery charging and discharging circuit is a magnitude of a current that matches the first target current value, it may be ensured that the voltage value of the storage battery is less than the second voltage value.

Apparently, when the first voltage feedback control and the second voltage feedback control are used together, the voltage of the storage battery may be controlled to be within a voltage value interval between the first voltage value and the second voltage value. For example, the voltage of the storage battery is controlled to be within 100 V to 200 V

(6) A first current feedback control for controlling a current of the storage battery to be greater than a first current value, to ensure that the charging and discharging intensity of the storage battery meets a specific requirement. For example, the first current value is 10 A.

It may be understood that the first current feedback control corresponds to a current indicator of the storage battery, and an objective of the first current feedback control is to adjust a sampled indicator of the current of the storage battery to a target indicator. The sampled indicator of the current of the storage battery may be obtained based on sampled data corresponding to the first current feedback control, and the target indicator of the current of the storage battery may be greater than the first current value.

An input of the first current feedback control may alternatively be at least one piece of the foregoing sampled data. An output of the first current feedback control may be a first target current value corresponding to the first current feedback control. When a magnitude of a current at a corresponding position in the battery charging and discharging circuit is a magnitude of a current that matches the first target current value, it may be ensured that the current value of the storage battery is greater than the first current value.

(7) A second current feedback control for controlling the current of the storage battery to be less than a second current value, to ensure that the charging intensity of the storage battery does not exceed the upper limit, thereby ensuring safety of the storage battery and the battery charging and discharging circuit, where the first current value is less than the second current value and is positive. For example, the second current value is 20 A.

It may be understood that the second current feedback control corresponds to the current indicator of the storage battery, and an objective of the second current feedback control is to adjust a sampled indicator of the current of the storage battery to the target indicator. The sampled indicator of the current of the storage battery may be obtained based on sampled data corresponding to the second current feedback control, and the target indicator of the current of the storage battery may be less than the second current value.

An input of the second current feedback control may alternatively be at least one piece of the foregoing sampled data. An output of the second current feedback control may be a first target current value corresponding to the second current feedback control. When a magnitude of a current at a corresponding position in the battery charging and discharging circuit is a magnitude of a current that matches the first target current value, it may be ensured that the current value of the storage battery is less than the second current value.

Apparently, when the first current feedback control and the second current feedback control are used together, the current of the storage battery may be controlled to be within a current value interval between the first current value and the second current value. For example, the current of the storage battery is controlled to be 10 A to 20 A.

It should be noted that the foregoing feedback controls may be implemented in a processor, and each feedback control may be implemented by a corresponding feedback control unit. For example, the bus voltage feedback control may be implemented by a corresponding control information determining unit 0, the first power feedback control may be implemented by a corresponding control information determining unit 1-1, the second power feedback control may be implemented by a corresponding control information determining unit 1-2, the first battery voltage feedback control may be implemented by a corresponding control information determining unit 2-1, the second battery voltage feedback control may be implemented by a corresponding control information determining unit 2-2, the first current feedback control may be implemented by a corresponding control information determining unit 3-1, and the second current feedback control may be implemented by a corresponding control information determining unit 3-2.

An algorithm used to implement the foregoing feedback controls is not limited in this embodiment of this application. The foregoing merely lists several types of feedback controls as an example. A type of the feedback control used in the battery charging and discharging system is not limited in this embodiment of this application.

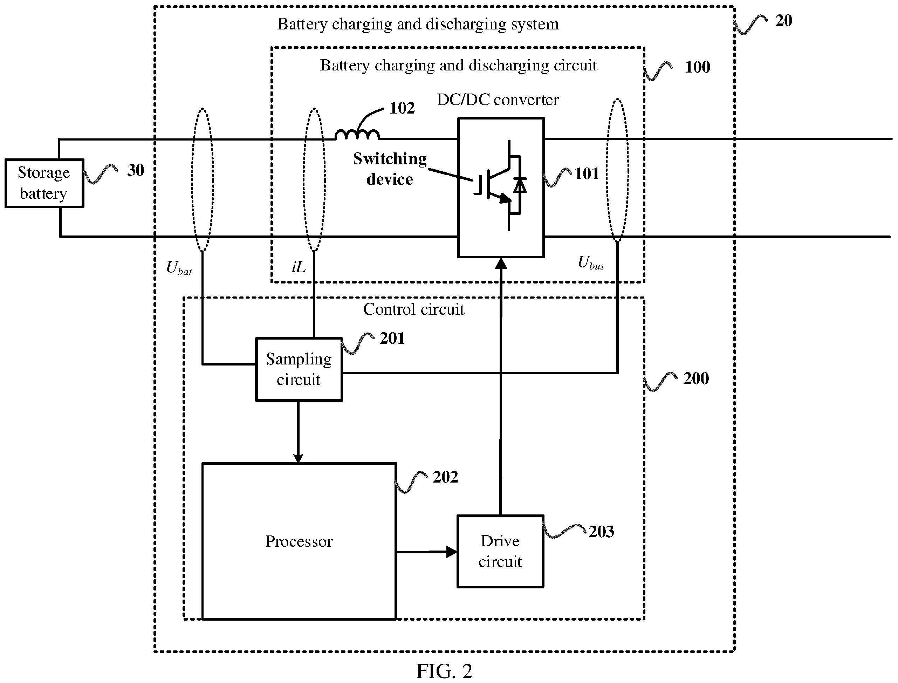

FIG. 2 is a schematic diagram of a structure of a battery charging and discharging system 20 according to an embodiment of this application.

The battery charging and discharging system 20 may specifically include: a battery charging and discharging circuit 100, and a control circuit 200 coupled to the battery charging and discharging circuit 100. Herein, only the battery charging and discharging circuit 100 shown in FIG. 2 is used as an example.

The battery charging and discharging circuit 100 includes a direct current-direct current (direct current-direct current, DC/DC) converter 101 and an inductor 102. The DC/DC converter 101 is configured to convert a fixed direct current voltage into a variable direct current voltage. The inductor 102 is configured to store and release electrical energy.

The DC/DC converter includes a switching device configured to adjust a magnitude of a current of the battery charging and discharging circuit 100. Specifically, in a possible implementation, the switching device may be an insulated gate bipolar transistor (insulated gate bipolar transistor, IGBT), and may add a forward voltage and a negative voltage to a gate and a base of the IGBT by using a drive signal, to control turn-on or turn-off of the IGBT. The turn-on or turn-off of the IGBT causes transfer of energy inside the DC/DC converter 101. In this way, the DC/DC converter 101 performs voltage boosting or voltage bucking, so that a magnitude of a voltage applied between positive and negative electrodes of the storage battery may be adjusted, thereby controlling magnitudes of a charging current and a discharging current of the storage battery.

The battery charging and discharging circuit 100 is connected to the storage battery 30 to form a loop, and may charge or discharge the storage battery 30.

A structure of the battery charging and discharging circuit 100 shown in FIG. 2 is merely an example structure. An inductor 102 in the figure represents an equivalent inductor. That is, the equivalent inductor 102 may be formed by several electronic components in an actual circuit.

The control circuit 200 includes a sampling circuit 201, a processor 202, and a drive circuit 203.

The sampling circuit 201 is configured to: perform sampling on the battery charging and discharging circuit 100; obtain sampled data; and output the sampled data to the processor 202.

This embodiment of this application may support at least two feedback controls. Correspondingly, the sampling circuit 201 may perform sampling on each feedback control, and output, to the processor 202, the obtained sampled data corresponding to each feedback control. It should be noted that sampled data required for each feedback control may be a magnitude of a current at a set point in the battery charging and discharging circuit 100, for example, a magnitude of a current flowing through a component or some components, or may be a magnitude of a voltage between two set points in the battery charging and discharging circuit 100, for example, a magnitude of a voltage between positive and negative electrodes of the storage battery, or may be a power of the storage battery. Certainly, the sampled data required for each feedback control may also include a magnitude of a current and a magnitude of a voltage. Sampled data obtained by performing sampling at a same position may be used for different feedback controls, and the sampled data required for each feedback control may also be obtained by performing sampling at different positions.

For example, details are as follows:
The sampled data corresponding to the first battery voltage feedback control and the sampled data corresponding to the second battery voltage feedback control may include at least a voltage value (represented by Ubat) of the positive and negative electrodes of the storage battery 30.

The sampled data corresponding to the first battery current feedback control and the sampled data corresponding to the second battery current feedback control may include at least a current value (represented by iL) from the positive electrode to the negative electrode of the storage battery 30.

The sampled data corresponding to the first battery power feedback control and the sampled data corresponding to the second battery power feedback control may include at least iL and Ubat.

The sampled data corresponding to the bus voltage feedback control may include at least a bus voltage value (represented by Ubus) of the battery charging and discharging circuit 100.

The processor 202 is configured to: determine a first target current value corresponding to each of at least two feedback controls based on sampled data corresponding to the at least two feedback controls; determine a second target current value based on the first target current value corresponding to each of the at least two feedback controls; generate control information based on the second target current value; and output the control information to the drive circuit 203, so that the drive circuit 203 generates, based on the control information, a drive signal for controlling a current of the battery charging and discharging circuit 100.

As described above, the first target current value output by (or corresponding to) each feedback control may include a current value, a value interval of the current value, or an adjustment value of the current value; and the second target current value obtained based on the first target current value output by (or corresponding to) a plurality of feedback controls (two or more feedback controls) may also include the current value, the value interval of the current value, or the adjustment value of the current value.

The processor 202 may be specifically an embedded single-chip microcomputer (STM32) chip, a central processing unit (central processing unit, CPU), or the like. The control information output by the processor 202 may be a pulse signal, for example, a pulse width modulation (pulse width modulation, PWM) pulse signal.

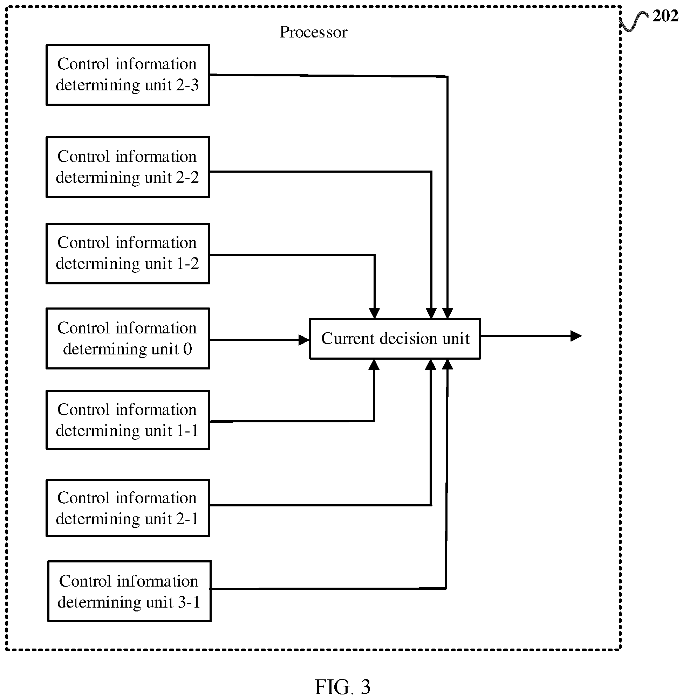

FIG. 3 is a schematic diagram of a structure of a processor 202 in a battery charging and discharging system according to an embodiment of this application. By using the foregoing seven feedback controls as an example, FIG. 3 describes an implementation method of determining a second target current value based on a first target current value output by each feedback control. A control information determining unit corresponding to each feedback control obtains the first target current value corresponding to each feedback control, and a current decision unit obtains a second target current value based on the first target current value corresponding to each feedback control. FIG. 3 shows a possible implementation only as an example. For other cases, for example, when at least two feedback controls include only a bus voltage feedback control, a first battery voltage feedback control, and a second battery voltage feedback control, refer to FIG. 3. Details are not described herein again.

Optionally, the second target current value may be obtained in a plurality of manners by using a first target current value corresponding to at least two feedback controls.

### Manner 1:

An average value of the first target current values corresponding to the at least two feedback controls is used as the second target current value. It should be noted that an operation of the average value of the first target current values corresponding to the at least two feedback controls herein is only an operation that considers the magnitude of the current.

For example, three feedback controls are used as an example. Current values of first target current values corresponding to the three feedback controls are respectively represented as 5 A, 9 A, and 4 A, and the second target current value is an average value of the first target current values corresponding to the three feedback controls, that is, 6 A.

### Manner 2:

A current value in the following current value interval is determined as a current value of the second target current value. A lower limit of the value interval is the minimum current value in the first target current values respectively corresponding to the at least two feedback controls, and an upper limit of the interval is the maximum current value in the first target current values respectively corresponding to the at least two feedback controls and a minimum value of rated current values of the battery charging and discharging circuit. In this way, a current value of the second target current value is greater than or equal to the minimum current value in the first target current values respectively corresponding to the at least two feedback controls, and is less than or equal to the maximum current value in the first target current values respectively corresponding to the at least two feedback controls, and is less than or equal to the rated current of the battery charging and discharging circuit. Certainly, the value interval may also be used as a value interval of the second target current value.

For example, five feedback controls are used as an example. First target current values corresponding to the five feedback controls are respectively represented as 15 A, 6 A, 4 A, 9 A, and 8 A, and the rated current is 12 A. A minimum current value is 4 A, and a maximum current value is 15 A. Therefore, the value interval of the second target current value may be 4 A to 12 A. A value of 10 A randomly selected from the value interval, or a median value of 8 A in the value interval may be used as a magnitude of the second target current value.

According to the foregoing Manner 2, the second target current value may adaptively fall between the minimum current value and the maximum current value in the first target current values, and is less than or equal to the rated current of the battery charging and discharging circuit. In this way, the current of the battery charging and discharging circuit may be controlled within the expected range, and safety of the battery charging and discharging circuit and/or the storage battery is ensured. In addition, because the second target current value is determined by synthesizing the first target current values of a plurality of feedback controls (two or more feedback controls), safety of the battery charging and discharging circuit and/or the storage battery is improved on the basis of considering control objectives of the at least two feedback controls.

### Manner 3:

The minimum current value in the first target current values corresponding to the at least two feedback controls is determined as a magnitude of the second target current value.

For example, the at least two feedback controls specifically include: a bus voltage feedback control, a first battery voltage feedback control, a second battery voltage feedback control, a first battery power feedback control, and a second battery power feedback control.

In the foregoing manner, the minimum current value in the first target current values corresponding to the at least two feedback controls is determined as the magnitude of the second target current value, and safety of the battery charging and discharging circuit may be ensured.

### Manner 4:

When any one of the at least two feedback controls corresponds to an indicator of the battery charging and discharging circuit, and is configured to adjust, by using the first target current value, a sampled indicator obtained based on the sampled data to a preset target indicator, the processor determines a second target current value based on the first target current value corresponding to each of the at least two feedback controls. A specific process may be:
determining an indicator deviation corresponding to each of the at least two feedback controls, where an indicator deviation corresponding to any one of the at least two feedback controls indicates a difference between the sampled indicator obtained by the feedback control based on the sampled data and the preset target indicator; selecting one of the at least two feedback controls based on the indicator deviation corresponding to each of the at least two feedback controls; and determining a first target current value corresponding to the selected feedback control as the second target current value.

For one feedback control, an indicator deviation of the feedback control indicates a difference between the sampled indicator obtained by the feedback control based on the sampled data and the preset target indicator. It may be understood that the preset target indicator is an ideal indicator of the battery charging and discharging circuit.

Optionally, for one feedback control, a value of an indicator deviation of the feedback control may be a deviation ratio of the sampled indicator obtained by the feedback control based on the sampled data to the preset target indicator. Specifically, the deviation ratio is a ratio of a deviation value to the sampled indicator, and the deviation value is an absolute value of a difference obtained by subtracting the preset target indicator from the sampled indicator.

A rule for specifically selecting one of the at least two feedback controls may be flexibly set. For example, a first target current value corresponding to a maximum indicator deviation may be preferentially selected as the second target current value, to preferentially adjust a feedback control of a sampled indicator exceeding the preset target indicator, and effectively protect the battery charging and discharging circuit. If all indicator deviations are non-negative, a first target current value corresponding to a feedback control with the maximum indicator deviation is preferentially selected, and a feedback control with a highest adjustment requirement is preferentially met.

Optionally, the foregoing Manner 4 may further include the following two sub-cases:
In a case (3-1), if a first indicator deviation in indicator deviations respectively corresponding to the at least two feedback controls is a unique highest indicator deviation, a first target current value corresponding to the first indicator deviation is determined as the second target current value.

For example, an indicator deviation 0 is 0.1, an indicator deviation 1-1 is 0.4, an indicator deviation 1-2 is 0.3, an indicator deviation 2-1 is 0.1, an indicator deviation 2-2 is 0.2, an indicator deviation 3-1 is 0.1, and an indicator deviation 3-2 is 0.2.

The first indicator deviation, that is, the indicator deviation 1-1, is a unique highest indicator deviation, and therefore, a first target current value 1-1 corresponding to the indicator deviation 1-1 is the second target current value.

In a case (3-2), if N indicator deviations are the highest among the indicator deviations respectively corresponding to the at least two feedback controls, a feedback control corresponding to a second indicator deviation is randomly selected from feedback controls corresponding to the N indicator deviations, and a first target current value corresponding to the feedback control corresponding to the second indicator deviation is determined as the second target current value.

N is an integer greater than or equal to 2.

For example, an indicator deviation 0 is 0.1, an indicator deviation 1-1 is 0.2, an indicator deviation 1-2 is 0.3, an indicator deviation 2-1 is 0.1, an indicator deviation 2-2 is 0.3, an indicator deviation 3-1 is 0.1, and an indicator deviation 3-2 is 0.2.

The N indicator deviations are two indicator deviations: the indicator deviation 1-2 and the indicator deviation 2-2. Therefore, a first target current value 2-2 corresponding to the second battery power feedback control that is randomly selected from a feedback control (that is, the second battery voltage feedback control) corresponding to the indicator deviation 1-2 and a feedback control (that is, the second battery power feedback control) corresponding to the indicator deviation 2-2 is determined as the second target current value.

### Manner 5:

When any one of the at least two feedback controls corresponds to an indicator of the battery charging and discharging circuit, and is configured to adjust, by using the first target current value, a sampled indicator obtained based on the sampled data to a preset target indicator, the processor determines a second target current value based on the first target current value corresponding to each of the at least two feedback controls. A specific process may be:
separately determining an indicator deviation corresponding to each of the at least two feedback controls, where an indicator deviation corresponding to any one of the at least two feedback controls indicates a difference between a sampled indicator obtained by the feedback control based on sampled data and a preset target indicator;
determining a weight corresponding to each of the at least two feedback controls based on the indicator deviation corresponding to each of the at least two feedback controls; and
performing weighted accumulation on the first target current value corresponding to each of the at least two feedback controls based on the weight corresponding to each of the at least two feedback controls, and determining a result of the weighted accumulation as the second target current value.

There may be a plurality of specific manners for determining the weight corresponding to each of the at least two feedback controls based on the indicator deviation corresponding to each of the at least two feedback controls. A larger indicator deviation indicates a greater demand for feedback control adjustment corresponding to the indicator deviation. Therefore, a weight corresponding to the feedback control may be determined according to a principle that the weight corresponding to the feedback control is positively correlated with the indicator deviation corresponding to the feedback control. Specifically, the indicator deviation corresponding to the feedback control may be used as the weight corresponding to the feedback control.

For example, the at least two feedback controls specifically include: a bus voltage feedback control, a first battery voltage feedback control, a second battery voltage feedback control, a first battery power feedback control, and a second battery power feedback control.

Correspondingly, the first target current value corresponding to each of the at least two feedback controls specifically includes: a first target current value 0, a first target current value 1-1, a first target current value 1-2, a first target current value 2-1, and a first target current value 2-2. An indicator deviation 0 corresponding to the bus voltage feedback control is 0.1, an indicator deviation 1-1 corresponding to the first battery voltage feedback control is 0.1, an indicator deviation 1-2 corresponding to the second battery voltage feedback control is 0.3, an indicator deviation 2-1 corresponding to the first battery power feedback control is 0.1, and an indicator deviation 2-2 corresponding to the second battery power feedback control is 0.2.

In a possible implementation, a weight corresponding to the bus voltage feedback control is 0.1, a weight corresponding to the first battery voltage feedback control is 0.1, a weight corresponding to the second battery voltage feedback control is 0.3, a weight corresponding to the first battery power feedback control is 0.1, and a weight corresponding to the second battery power feedback control is 0.2.

### Manner 6:

A specific process in which the processor determines the second target current value based on the first target current value corresponding to each of the at least two feedback controls may be as follows:
performing weighted accumulation on the first target current value corresponding to each of the at least two feedback controls based on a preset weight corresponding to each of the at least two feedback controls, and determining a result of the weighted accumulation as the second target current value.

It should be noted that the preset weight may be set based on a degree of focus on different performance indicators. If a performance indicator that focuses on adjustment is a battery power, the weight corresponding to the first battery power feedback control and the weight corresponding to the first battery power feedback control are set to be the highest.

For example, the at least two feedback controls specifically include: a bus voltage feedback control, a first battery power feedback control, a second battery power feedback control, a first battery current feedback control, and a second battery current feedback control. A weight corresponding to the bus voltage feedback control is set to 0.4, a weight corresponding to the first battery power feedback control is set to 0.8, a weight corresponding to the second battery power feedback control is set to 0.8, a weight corresponding to the first battery current feedback control is set to 0.6, and a weight corresponding to the second battery current feedback control is set to 0.6. In other words, an adjustment requirement for a battery power is relatively high, followed by a battery current, and then a bus voltage.

Further, the preset weight corresponding to each of the at least two feedback controls may be set based on a time period. For example, in a first time period, the weight corresponding to the first battery power feedback control and the weight corresponding to the second battery power feedback control are set to the highest, and in a second time period, the weight corresponding to the first battery current feedback control and the weight corresponding to the second battery current feedback control are set to the highest.

The battery charging and discharging system shown in FIG. 2 further includes a drive circuit 203, configured to generate a drive signal based on control information output by the processor 202. The drive signal is used to control a current of the battery charging and discharging circuit 100. Specifically, when the battery charging and discharging circuit 100 includes a DC/DC converter, the drive signal may be output to the DC/DC converter. The drive signal is used to control a switching status of a switching device in the DC/DC converter.

Specifically, in a possible implementation, after receiving the control information (for example, a PWM pulse signal) output by the processor 202, the drive circuit 203 further generates an amplified drive signal, to control the switching status of the switching device in the DC/DC converter. In this way, the DC/DC converter may generate voltages of different magnitudes, and may output currents of different magnitudes.

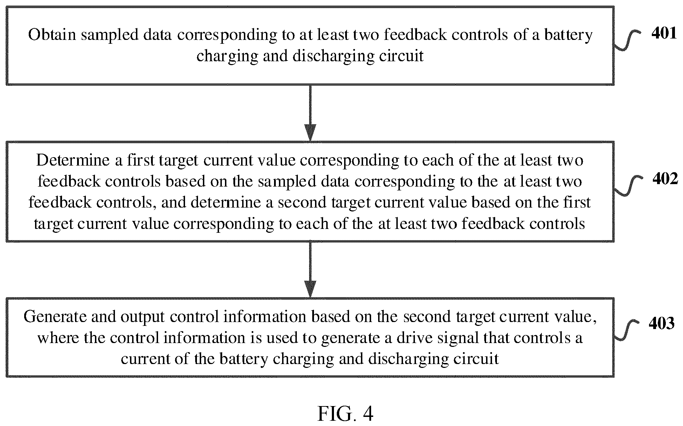

Correspondingly, as shown in FIG. 4, this application provides a battery charging control method. The method is applicable to the battery charging and discharging system provided in the foregoing embodiment of this application. The method may be executed by a processor 202 in the control circuit 200 in the foregoing battery charging and discharging system, and the method may include the following steps.

Step 401: Obtain sampled data corresponding to at least two feedback controls of a battery charging and discharging circuit.

Step 402: Determine a first target current value corresponding to each of the at least two feedback controls based on the sampled data corresponding to the at least two feedback controls, and determine a second target current value based on the first target current value corresponding to each of the at least two feedback controls.

Step 403: Generate and output control information based on the second target current value, where the control information is used to generate a drive signal that controls a current of the battery charging and discharging circuit.

In step 401, the at least two feedback controls may be the foregoing feedback controls (1) to (7), and the sampled data corresponding to the at least two feedback controls may be obtained from a sampling circuit 201 in the control circuit 200. For specific information that may be included in the sampled data corresponding to the at least two feedback controls, refer to descriptions of the sampling circuit 201.

Step 402 may be specifically performed according to the foregoing Manner 1 to Manner 6.

The control information output in step 403 may be a PWM pulse signal.

Based on the foregoing content, an embodiment of this application further describes in detail a process of the battery charging control method.

For example, according to a feedback control periodicity, at the beginning (denoted as a moment T 1) of a first feedback control periodicity, based on a first target current value 1-1 of a first battery voltage feedback control, a first target current value 1-2 of a second battery voltage feedback control, a first target current value 2-1 of a first battery power feedback control, a first target current value 2-2 of a second battery power feedback control, and a first target current value 0 of a bus voltage feedback control, the second target current value is determined as the first target current value (1-1) according to the foregoing Manner 1 to Manner 6.

In a period (from the moment T1 to a moment T2) of a second feedback control periodicity adjacent to the first feedback control periodicity, for the second battery voltage feedback control, the first battery power feedback control, the second battery power feedback control, and the bus voltage feedback control, corresponding sampled data may continue to be obtained based on a sampling periodicity (the sampling periodicity is less than the feedback control periodicity) of each feedback control, and the first target current value is output based on the corresponding sampled data in a corresponding sampling periodicity until the moment T2 arrives.

At the moment T2, for the first target current value 1-1, the first target current value 1-2, the first target current value 2-1, the first target current value 2-2, and the first target current value 0, the second target current value is determined as the first target current value 2-2 according to the foregoing Manner 1 to Manner 6, and a current at a corresponding position in the battery charging and discharging circuit is updated from the first target current value 1-1 to the first target current value 2-2.

In a period (from the moment T2 to a moment T3) of a third feedback control periodicity adjacent to the second feedback control periodicity, a process from the moment T1 to the moment T2 is repeated until the moment T3 arrives.

By analogy, at each subsequent moment such as T4 and T5, that is, at the beginning of each feedback control periodicity, if the second target current value is updated (for example, at the moment T4), a current at a corresponding position in the battery charging and discharging circuit is adjusted, and the cycle is repeated, so that feedback control is periodically performed on the current in the battery charging and discharging circuit.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that each procedure and/or block in the flowcharts and/or block diagrams, and combinations of the procedures and/or blocks in the flowcharts and/or block diagrams may be implemented by computer program instructions. These computer program instructions may be provided to a processor of a general-purpose computer, a special-purpose computer, an embedded processor, or another programmable data processing device to generate a machine, such that the instructions executed by the processor of the computer or another programmable data processing device generate an apparatus for implementing a specific function in one or more procedures in the flowcharts and/or one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to this application without departing from the protection scope of this application. In this way, if these changes and variations to this application fall within the scope of the claims of this application and equivalent technologies thereof, this application is also intended to include these changes and variations.

## Claims

1. A battery charging and discharging system, comprising a battery charging and discharging circuit and a control circuit coupled to the battery charging and discharging circuit, wherein the battery charging and discharging circuit comprises a DC/DC converter, the DC/DC converter comprises a switching device configured to adjust a magnitude of a current of the battery charging and discharging circuit, and the control circuit comprises a sampling circuit, a processor, and a drive circuit;
the sampling circuit is configured to: perform sampling on the battery charging and discharging circuit; obtain sampled data corresponding to at least two feedback controls; and output, to the processor, the sampled data corresponding to the at least two feedback controls;
the processor is configured to: determine a first target current value corresponding to each of the at least two feedback controls based on the sampled data corresponding to the at least two feedback controls; determine a second target current value based on the first target current value corresponding to each of the at least two feedback controls; generate control information based on the second target current value; and output the control information to the drive circuit; and
the drive circuit is configured to: generate a drive signal based on the control information output by the processor; and output the drive signal to the DC/DC converter, wherein the drive signal is used to control a switching status of the switching device in the DC/DC converter.

2. The system according to claim 1, wherein the processor is specifically configured to:
determine a minimum current value in first target current values corresponding to the at least two feedback controls as the second target current value.

3. The system according to claim 1, wherein any one of the at least two feedback controls corresponds to an indicator of the battery charging and discharging circuit, and is configured to adjust, by using the first target current value, a sampled indicator obtained based on the sampled data to a preset target indicator; and the processor is specifically configured to:
determine an indicator deviation corresponding to each of the at least two feedback controls, wherein an indicator deviation corresponding to any one of the at least two feedback controls indicates a difference between the sampled indicator obtained by the feedback control based on the sampled data and the preset target indicator;
select one of the at least two feedback controls based on the indicator deviation corresponding to each of the at least two feedback controls; and
determine a first target current value corresponding to the selected feedback control as the second target current value.

4. The system according to claim 3, wherein the processor is specifically configured to:
if a first indicator deviation in indicator deviations respectively corresponding to the at least two feedback controls is a unique highest indicator deviation, determine a first target current value corresponding to the first indicator deviation as the second target current value; or
if N indicator deviations are the highest among the indicator deviations respectively corresponding to the at least two feedback controls, randomly select a feedback control corresponding to a second indicator deviation from feedback controls corresponding to the N indicator deviations, and determine a first target current value corresponding to the feedback control corresponding to the second indicator deviation as the second target current value, wherein
N is an integer greater than or equal to 2.

5. The system according to claim 1, wherein any one of the at least two feedback controls corresponds to an indicator of the battery charging and discharging circuit, and is configured to adjust, by using the first target current value, a sampled indicator obtained based on the sampled data to a preset target indicator; and the processor is specifically configured to:
determine an indicator deviation corresponding to each of the at least two feedback controls, wherein an indicator deviation corresponding to any one of the at least two feedback controls indicates a difference between the sampled indicator obtained by the feedback control based on the sampled data and the preset target indicator;
determine a weight corresponding to each of the at least two feedback controls based on the indicator deviation corresponding to each of the at least two feedback controls; and
perform weighted accumulation on the first target current value corresponding to each of the at least two feedback controls based on the weight corresponding to each of the at least two feedback controls, and determine a result of the weighted accumulation as the second target current value.

6. The system according to claim 1, wherein the processor is specifically configured to:
perform weighted accumulation on the first target current value corresponding to each of the at least two feedback controls based on a preset weight corresponding to each of the at least two feedback controls, and determine a result of the weighted accumulation as the second target current value.

7. The system according to any one of claims 1 to 6, wherein the at least two feedback controls comprise a bus voltage feedback control for controlling a bus voltage of the battery charging and discharging circuit to be within a preset voltage range, and comprise at least one of the following feedback controls:
a first power feedback control for controlling a power of a storage battery to be greater than a first power value;
a second power feedback control for controlling the power of the storage battery to be less than a second power value, wherein the first power value is less than the second power value;
a first battery voltage feedback control for controlling a voltage of the storage battery to be greater than a first voltage value;
a second battery voltage feedback control for controlling the voltage of the storage battery to be less than a second voltage value, wherein the first voltage value is less than the second voltage value and is positive;
a first current feedback control for controlling a current of the storage battery to be greater than a first current value; and
a second current feedback control for controlling the current of the storage battery to be less than a second current value, wherein the first current value is less than the second current value and is positive.

8. A battery charging and discharging control circuit, comprising a sampling circuit, a control information generation circuit, and a drive circuit, wherein
the sampling circuit is configured to: perform sampling on a battery charging and discharging circuit coupled to the battery charging and discharging control circuit; obtain sampled data corresponding to at least two feedback controls; and output, to a processor, the sampled data corresponding to the at least two feedback controls;
the processor is configured to: determine a first target current value corresponding to each of the at least two feedback controls based on the sampled data corresponding to the at least two feedback controls; determine a second target current value based on the first target current value corresponding to each of the at least two feedback controls; generate control information based on the second target current value; and output the control information to the drive circuit; and
the drive circuit is configured to: generate a drive signal based on the control information output by the processor, wherein the drive signal is used to control a current of the battery charging and discharging circuit.

9. The control circuit according to claim 8, wherein the processor is specifically configured to:
determine a minimum current value in first target current values corresponding to the at least two feedback controls as a magnitude of the second target current value.

10. The control circuit according to claim 8, wherein any one of the at least two feedback controls corresponds to an indicator of the battery charging and discharging circuit, and is configured to adjust, by using the first target current value, a sampled indicator obtained based on the sampled data to a preset target indicator; and the processor is specifically configured to:
determine an indicator deviation corresponding to each of the at least two feedback controls, wherein an indicator deviation corresponding to any one of the at least two feedback controls indicates a difference between the sampled indicator obtained by the feedback control based on the sampled data and the preset target indicator;
select one of the at least two feedback controls based on the indicator deviation corresponding to each of the at least two feedback controls; and
determine a first target current value corresponding to the selected feedback control as the second target current value.

11. The control circuit according to claim 10, wherein the processor is specifically configured to:
if a first indicator deviation in indicator deviations respectively corresponding to the at least two feedback controls is a unique highest indicator deviation, determine a first target current value corresponding to the first indicator deviation as the second target current value; or
if N indicator deviations are the highest among the indicator deviations respectively corresponding to the at least two feedback controls, randomly select a feedback control corresponding to a second indicator deviation from feedback controls corresponding to the N indicator deviations, and determine a first target current value corresponding to the feedback control corresponding to the second indicator deviation as the second target current value, wherein
N is an integer greater than or equal to 2.

12. The control circuit according to claim 8, wherein any one of the at least two feedback controls corresponds to an indicator of the battery charging and discharging circuit, and is configured to adjust, by using the first target current value, a sampled indicator obtained based on the sampled data to a preset target indicator; and the processor is specifically configured to:
determine an indicator deviation corresponding to each of the at least two feedback controls, wherein an indicator deviation corresponding to any one of the at least two feedback controls indicates a difference between the sampled indicator obtained by the feedback control based on the sampled data and the preset target indicator;
determine a weight corresponding to each of the at least two feedback controls based on the indicator deviation corresponding to each of the at least two feedback controls; and
perform weighted accumulation on the first target current value corresponding to each of the at least two feedback controls based on the weight corresponding to each of the at least two feedback controls, and determine a result of the weighted accumulation as the second target current value.

13. The control circuit according to claim 8, wherein the processor is specifically configured to:
perform weighted accumulation on the first target current value corresponding to each of the at least two feedback controls based on a preset weight corresponding to each of the at least two feedback controls, and determine a result of the weighted accumulation as the second target current value.

14. The control circuit according to any one of claims 8 to 13, wherein the at least two feedback controls comprise a bus voltage feedback control for controlling a bus voltage of the battery charging and discharging circuit to be within a preset voltage range, and comprise at least one of the following feedback controls:
a first power feedback control for controlling a power of a storage battery to be greater than a first power value;
a second power feedback control for controlling the power of the storage battery to be less than a second power value, wherein the first power value is less than the second power value;
a first battery voltage feedback control for controlling a voltage of the storage battery to be greater than a first voltage value;
a second battery voltage feedback control for controlling the voltage of the storage battery to be less than a second voltage value, wherein the first voltage value is less than the second voltage value and is positive;
a first current feedback control for controlling a current of the storage battery to be greater than a first current value; and
a second current feedback control for controlling the current of the storage battery to be less than a second current value, wherein the first current value is less than the second current value and is positive.

15. A battery charging control method, wherein the method is applicable to a battery charging and discharging system, and the battery charging and discharging system comprises a battery charging and discharging circuit and a control circuit coupled to the battery charging and discharging circuit; and the method comprises:
obtaining sampled data corresponding to at least two feedback controls of the battery charging and discharging circuit;
determining a first target current value corresponding to each of the at least two feedback controls based on the sampled data corresponding to the at least two feedback controls; and determining a second target current value based on the first target current value corresponding to each of the at least two feedback controls; and
generating and outputting control information based on the second target current value, wherein the control information is used to generate a drive signal that controls a current of the battery charging and discharging circuit.

16. The method according to claim 15, wherein the determining a second target current value based on the first target current value corresponding to each of the at least two feedback controls comprises:
determining a minimum current value in first target current values corresponding to the at least two feedback controls as a magnitude of the second target current value.

17. The method according to claim 15, wherein any one of the at least two feedback controls corresponds to an indicator of the battery charging and discharging circuit, and is configured to adjust, by using the first target current value, a sampled indicator obtained based on the sampled data to a preset target indicator; and the determining a second target current value based on the first target current value corresponding to each of the at least two feedback controls comprises:
determining an indicator deviation corresponding to each of the at least two feedback controls, wherein an indicator deviation corresponding to any one of the at least two feedback controls indicates a difference between the sampled indicator obtained by the feedback control based on the sampled data and the preset target indicator;
selecting one of the at least two feedback controls based on the indicator deviation corresponding to each of the at least two feedback controls; and
determining a first target current value corresponding to the selected feedback control as the second target current value.

18. The method according to claim 17, wherein the selecting one of the at least two feedback controls based on the indicator deviation corresponding to each of the at least two feedback controls, and the determining a first target current value corresponding to the selected feedback control as the second target current value comprise:
if a first indicator deviation in indicator deviations respectively corresponding to the at least two feedback controls is a unique highest indicator deviation, determining a first target current value corresponding to the first indicator deviation as the second target current value; or
if N indicator deviations are the highest among the indicator deviations respectively corresponding to the at least two feedback controls, randomly selecting a feedback control corresponding to a second indicator deviation from feedback controls corresponding to the N indicator deviations, and determining a first target current value corresponding to the feedback control corresponding to the second indicator deviation as the second target current value, wherein
N is an integer greater than or equal to 2.

19. The method according to claim 15, wherein any one of the at least two feedback controls corresponds to an indicator of the battery charging and discharging circuit, and is configured to adjust, by using the first target current value, a sampled indicator obtained based on the sampled data to a preset target indicator; and the determining a second target current value based on the first target current value corresponding to each of the at least two feedback controls comprises:
determining an indicator deviation corresponding to each of the at least two feedback controls, wherein an indicator deviation corresponding to any one of the at least two feedback controls indicates a difference between the sampled indicator obtained by the feedback control based on the sampled data and the preset target indicator;
determining a weight corresponding to each of the at least two feedback controls based on the indicator deviation corresponding to each of the at least two feedback controls; and
performing weighted accumulation on the first target current value corresponding to each of the at least two feedback controls based on the weight corresponding to each of the at least two feedback controls, and determining a result of the weighted accumulation as the second target current value.

20. The method according to claim 15, wherein the determining a second target current value based on the first target current value corresponding to each of the at least two feedback controls comprises:
performing weighted accumulation on the first target current value corresponding to each of the at least two feedback controls based on a preset weight corresponding to each of the at least two feedback controls, and determining a result of the weighted accumulation as the second target current value.

21. The method according to any one of claims 15 to 20, wherein the at least two feedback controls comprise a bus voltage feedback control for controlling a bus voltage of the battery charging and discharging circuit to be within a preset voltage range, and comprise at least one of the following feedback controls:
a first power feedback control for controlling a power of a storage battery to be greater than a first power value;
a second power feedback control for controlling the power of the storage battery to be less than a second power value, wherein the first power value is less than the second power value;
a first battery voltage feedback control for controlling a voltage of the storage battery to be greater than a first voltage value;
a second battery voltage feedback control for controlling the voltage of the storage battery to be less than a second voltage value, wherein the first voltage value is less than the second voltage value and is positive;
a first current feedback control for controlling a current of the storage battery to be greater than a first current value; and
a second current feedback control for controlling the current of the storage battery to be less than a second current value, wherein the first current value is less than the second current value and is positive.
